# FASCICULE DE BREVET EUROPEEN

(11) **EP 3 321 999 B1**
(45) Date de publication et mention de la délivrance du brevet: **09.10.2019**
(21) Numéro de dépôt: 17200968.0
(22) Date de dépôt: 10.11.2017
(51) Int. Cl.: H01M 2/14, H01M 10/0525, H01M 10/054, H01M 10/0565

(54) **PROCÉDÉ DE FABRICATION D'UNE MEMBRANE SÉPARATRICE POUR ACCUMULATEUR**
HERSTELLUNGSVERFAHREN EINER TRENNMEMBRAN FÜR EINEN AKKUMULATOR
METHOD FOR MANUFACTURING A SEPARATING MEMBRANE FOR A BATTERY

(30) Priorité: 15.11.2016 FR 1661024
(43) Date de publication de la demande: 16.05.2018
(73) Titulaire: Commissariat à l'énergie atomique et aux énergies alternatives, 75015 Paris (FR)
(72) Inventeur: SOLAN, Sébastien, 38170 SEYSSINET-PARISET (FR); GUERIN, Camille, 38000 GRENOBLE (FR)
(74) Mandataire: Brevalex

(56) Documents cités:
- MYUNG-HYUN RYOU ET AL: "Cross-linkable Polymer Matrix for Enhanced Thermal Stability of Succinonitrile-based Polymer Electrolyte in Lithium Rechargeable Batteries", JOURNAL OF ELECTROCHEMICAL SCIENCE AND TECHNOLOGY, vol. 2, no. 4, 31 décembre 2011 (2011-12-31), pages 198-203, XP055083429, ISSN: 2093-8551, DOI: 10.5229/JECST.2011.2.4.198
- FAN L-Z ET AL: "SUCCINONITRILE AS A VERSATILE ADDITIVE FOR POLYMER ELECTROLYTES", ADVANCED FUNCTIONAL MATERIALS, WILEY - V C H VERLAG GMBH & CO. KGAA, DE, vol. 17, no. 15, 15 octobre 2007 (2007-10-15), pages 2800-2807, XP001507267, ISSN: 1616-301X, DOI: 10.1002/ADFM.200601070
- FAN L Z ET AL: "All-solid-state polymer electrolyte with plastic crystal materials for rechargeable lithium-ion battery", JOURNAL OF POWER SOURCES, ELSEVIER SA, CH, vol. 189, no. 1, 9 août 2008 (2008-08-09), pages 775-778, XP025982797, ISSN: 0378-7753, DOI: 10.1016/J.JPOWSOUR.2008.07.083 [extrait le 2008-08-09]
- VOIGT NADINE ET AL: "The effect of plastic-crystalline succinonitrile on the electrolyte system PEO:LiBF4: Insights from solid state NMR", SOLID STATE IONICS, vol. 260, 12 avril 2014 (2014-04-12), pages 65-75, XP028644791, ISSN: 0167-2738, DOI: 10.1016/J.SSI.2014.03.009
- FAN L Z ET AL: "Composite effects in poly(ethylene oxide)-succinonitrile based all-solid electrolytes", ELECTROCHEMISTRY COMMUNICATIONS, ELSEVIER, AMSTERDAM, NL, vol. 8, no. 11, 7 septembre 2006 (2006-09-07), pages 1753-1756, XP028041714, ISSN: 1388-2481, DOI: 10.1016/J.ELECOM.2006.08.017 [extrait le 2006-11-01]
- LI YAN-HUA ET AL: "A novel polymer electrolyte with improved high-temperature-tolerance up to 170 DEG C for high-temperature lithium-ion batteries", JOURNAL OF POWER SOURCES, vol. 244, 1 février 2013 (2013-02-01), pages 234-239, XP028692049, ISSN: 0378-7753, DOI: 10.1016/J.JPOWSOUR.2013.01.148
- KATHARINA M. FREITAG ET AL: "Enhancement of Li Ion Conductivity by Electrospun Polymer Fibers and Direct Fabrication of Solvent-Free Separator Membranes for Li Ion Batteries", INORGANIC CHEMISTRY, vol. 56, no. 4, 20 février 2017 (2017-02-20), pages 2100-2107, XP055353193, EASTON, US ISSN: 0020-1669, DOI: 10.1021/acs.inorgchem.6b02781

## Description

### DOMAINE TECHNIQUE

La présente invention concerne un procédé de fabrication d'une membrane séparatrice pour accumulateur. Plus particulièrement, la présente invention concerne un procédé de fabrication d'une membrane séparatrice, sous forme gélifiée, pour accumulateur, flexible, voire déformable.

### ART ANTÉRIEUR

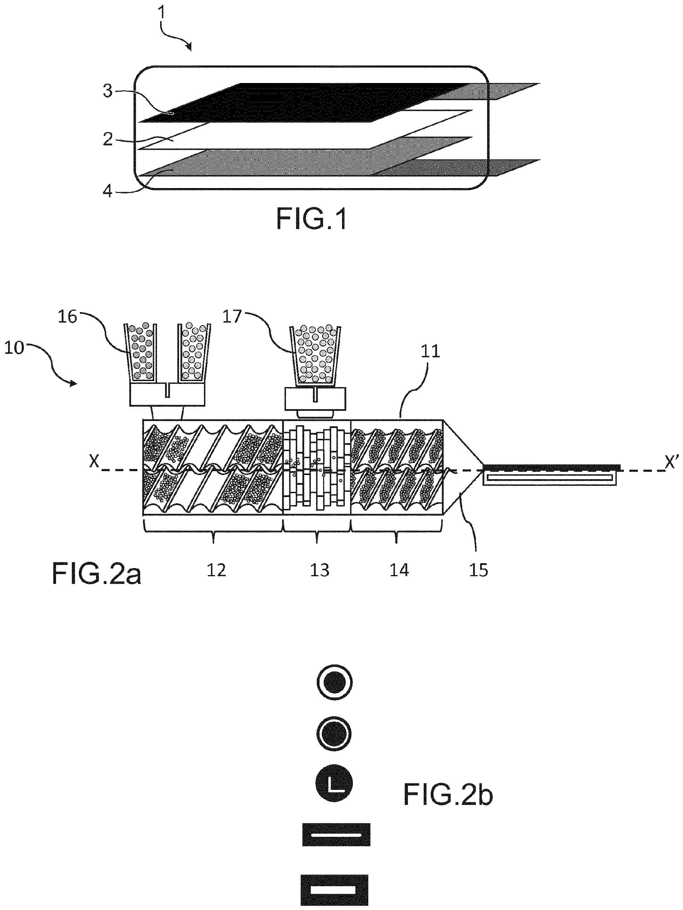

Un batterie lithium ion, illustrée à la figure 1 et connue de l'état de la technique, comprend en général :
- un ou plusieurs coeurs électrochimiques 1, chaque coeur électrochimique comprenant un constituant électrolytique 2 intercalé entre une électrode négative 3 et une électrode positive 4, ladite électrode positive comprenant un matériau d'insertion, par exemple le cation lithium,
- deux collecteurs de courant 5 et 6, respectivement, de l'électrode positive et de l'électrode négative,
- un emballage, solide ou souple, dans lequel est disposé le coeur électrochimique, et fermé hermétiquement de manière à assurer l'étanchéité du dispositif.

Des pattes de reprise de courant, connectées aux deux collecteurs, sortent de l'emballage.

L'électrode positive comprend généralement un matériau d'insertion du cation lithium. Ce matériau d'insertion peut par exemple comprendre des matériaux composites du type, par exemple, LiFePO₄ (phosphate de fer lithié), ou oxyde de métaux de transition (matériaux lamellaires : LiCoO₂ : oxyde de cobalt lithié, LiNi_{0.33}Mn_{0.33}Co_{0.33}O₂, etc...).

Le constituant électrolytique comprend un séparateur séparant physiquement les électrodes positive et négative. Le séparateur peut comprendre un matériau polymère ou un composite microporeux, et est généralement imbibé d'une solution électrolytique organique destinée à assurer le transport des ions lithium d'une électrode à l'autre. Plus particulièrement, il s'agit d'un transport des ions lithium de l'électrode positive vers l'électrode négative lors d'un cycle de charge et inversement lors d'un cycle de décharge.

La solution électrolytique organique, généralement exempte de traces d'eau et/ou d'oxygène, peut comprendre un mélange de solvants organiques (par exemple des carbonates) auquel est ajouté un sel de lithium, par exemple du LiPF₆.

L'électrode négative peut être en carbone graphite, en silicium, ou, dès lors que des applications de puissance sont envisagées, en Li₄Ti₅O₁₂ (matériau titanate).

Le collecteur de courant de l'électrode positive est généralement en aluminium. Par ailleurs, l'électrode positive peut être formée par une technique de dépôt du matériau d'insertion sur le collecteur de courant. La technique de dépôt peut être une technique d'induction, de sérigraphie, de jet d'encre ou encore de pulvérisation en voie liquide.

Le collecteur de courant de l'électrode négative peut être en cuivre ou en aluminium, selon que l'électrode négative est, respectivement, en carbone graphite ou en matériau titanate.

Ainsi, l'assemblage de la batterie lithium ion, connu de l'état de la technique, comprend en général une première étape de mise en place du ou des coeurs électrolytiques, dépourvu de la solution électrolytique, dans l'emballage.

L'assemblage de la batterie lithium ion comprend en outre une seconde étape d'introduction de la solution électrolytique destinée à mouiller le ou les coeurs électrolytiques, et plus particulièrement, à imbiber le séparateur du ou des coeurs électrolytiques.

Enfin, l'emballage est scellé, par exemple thermo scellé, de manière à rendre l'assemblage étanche.

Il est entendu que les pattes de reprise de courant ont été positionnées avant le scellement de l'emballage.

Toutefois, ce procédé de fabrication d'une batterie lithium ion n'est pas satisfaisant.

En effet, le procédé d'assemblage connu de l'état de la technique nécessite l'utilisation d'une solution électrolytique liquide, qui est introduite dans l'emballage et de manière à correctement imprégner le séparateur.

Aussi, dans un souci de simplification du procédé, il est souhaitable de pouvoir supprimer cette étape.

Par ailleurs, les batteries lithium ions assemblées par le procédé d'assemblage connu de l'état de la technique offrent une flexibilité réduite, limitant d'autant la mise en forme desdites batteries (par enroulement par exemple).

En outre, le procédé d'assemblage connu de l'état de la technique est limité à la mise en oeuvre de séparateur plan. Or pour certaines applications, notamment des applications textiles, d'autres formes de séparateur peuvent être requises.

Les documents [1], [2], [3], [4], [5] et [6] cités à la fin de la description divulguent un procédé de fabrication d'une membrane séparatrice sous forme gélifiée d'une batterie métal alcalin-ion.

Toutefois, les procédés divulgués dans ces documents reste compliqués à mettre en oeuvre dès lors qu'il est question de conférer à la membrane une forme non plane.

Ainsi, un but de la présente invention est de proposer un procédé de fabrication d'une membrane séparatrice pour accumulateur permettant de simplifier le procédé d'assemblage dudit accumulateur.

Un autre but de la présente invention est également de proposer un procédé de fabrication d'une membrane flexible, voire déformable.

Un autre but de la présente invention est de proposer un procédé de fabrication d'une membrane permettant de conférer à ladite membrane d'autres formes qu'une surface plane.

### EXPOSÉ DE L'INVENTION

Les buts de la présente invention sont au moins en partie atteints par un procédé de fabrication d'une membrane séparatrice, sous forme gélifiée, d'une batterie métal alcalin-ion, le procédé comprend une étape d'extrusion d'un mélange comprenant :
- un sel de métal alcalin,
- un composé dinitrile de formule N≡C - R - C ≡ N, où R est un groupement hydrocarboné CₙH₂ₙ, et n étant égal à 1 ou 2, - un polymère support, présentant une température de transition vitreuse Tg, thermo fusible, soluble dans le composé dinitrile.

Le procédé selon l'invention permet ainsi de fabriquer une membrane séparatrice sous forme gélifiée comprenant l'électrolyte.

La membrane séparatrice ainsi fabriquée présente la tenue mécanique et la conductivité ionique requises pour être mise en oeuvre dans une batterie métal alcalin ion.

Le procédé d'extrusion ouvre également la voie à la fabrication de membranes de différentes formes, par exemple des fils, des tubes creux, notamment pour des applications dans les domaines textile et médical.

La mise en oeuvre du procédé de gélification du polymère support par le composé dinitrile confère à la membrane séparatrice une tenue mécanique suffisante pour être utilisée dans une batterie métal alcalin ion, et une flexibilité accrue par rapport aux membranes solides connues de l'état de la technique.

Par ailleurs, le procédé selon l'invention ne met en oeuvre qu'un seul solvant, le composé dinitrile, pour solubiliser le sel de métal alcalin, et conférer une forme gélifiée. Autrement dit, il n'est nullement nécessaire d'employer un solvant spécifique pour le polymère support. Par conséquent, aucune étape d'évaporation de solvant n'est requise pour la mise en oeuvre du procédé.

En outre, le procédé selon l'invention est un procédé plus simple à mettre oeuvre que ceux connus de l'état de la technique.

Selon un mode de mise en oeuvre, le sel de métal alcalin est solubilisé à chaud dans le composé dinitrile pour former un électrolyte.

Par solubilisé à chaud, on entend solubilisé à une température supérieure à la température de fusion du composé dinitrile.

Selon un mode de mise en oeuvre, l'extrusion est exécutée au moyen d'une extrudeuse comprenant au moins une zone de chauffe, au moins une zone de mélangeage, et une zone de pompage terminée par une filière.

Selon un mode de mise en oeuvre, le polymère support est introduit dans l'extrudeuse au niveau de la zone chauffe, où il est chauffé à une température T supérieure à sa température de transition vitreuse Tg, avantageusement à une température T comprise entre Tg et Tg + 50°C.

Selon un mode de mise en oeuvre, le sel de métal alcalin et le composé dinitrile sont introduits dans l'extrudeuse soit au niveau de la zone de chauffe, soit au niveau de la zone de mélangeage.

Selon un mode de mise en oeuvre, le sel de métal alcalin est un sel de métal lithium, avantageusement, le sel de métal lithium comprend au moins un des éléments choisi parmi : lithium bis-trifluorométhanesulfonimide, lithium bis(oxatlato)borate, LiPF₆, LiClO₄, LiBF₄, LiAsF₆, LiCF₃SO₃, LiN(CF₃SO₂)₃, LiN(C₂F₅SO₂).

Selon un mode de mise en oeuvre, le polymère support comprend au moins un des éléments choisi parmi : copolyfluorure de vinylidène hexafluoropropylène, poly(méthyl méthacrylate), poly(butyl méthacrylate), oxyde de polyéthylène, polyvinylpyrrolidone.

Selon un mode de mise en oeuvre, le rapport massique entre le composé dinitrile et le polymère support est compris entre 40/60 et 90/10.

Selon un mode de mise en oeuvre, le sel de métal alcalin présente une concentration comprise entre 0,5 mol/L⁻¹ et 5 mol/L⁻¹ dans le composé dinitrile.

### BRÈVE DESCRIPTION DES DESSINS

D'autres caractéristiques et avantages apparaîtront dans la description qui va suivre du procédé de fabrication d'une membrane séparatrice, sous forme gélifiée, d'une batterie métal alcalin-ion selon l'invention, donnés à titre d'exemples non limitatifs, en référence aux dessins annexés dans lesquels :
- la figure 1 est une représentation schématique d'une batterie lithium ions, plus particulièrement, la figure 1 représente l'empilement des éléments constitutifs du coeur électrolytique de ladite batterie,
- la figure 2a est une représentation schématique, selon un plan de coupe, d'une extrudeuse, le plan de coupe comprenant l'axe longitudinal XX',
- la figure 2b est une représentation schématique de différentes formes de filières possibles pour la mise en oeuvre du procédé selon l'invention,
- la figure 3 est une représentation graphique des conductivités ioniques en S/cm (sur l'axe vertical) de trois membranes, A, B, et C, comprenant du PMMA, gélifiées chacune avec du succinonitrile, pour différents rapports massiques succinonitrile/PMMA et différentes températures de formation,
- la figure 4 représente un premier cycle (Cycle 1), un cinquième cycle (cycle 5) et un dixième cycle d'une mesure de voltampérométrie (en mA sur l'axe vertical) cyclique exécutée pour des tensions comprises en 0 V et 5 V (en Volt sur l'axe horizontal) sur une membrane de PMMA gélifiée.

### EXPOSÉ DÉTAILLÉ DE MODES DE RÉALISATION PARTICULIERS

Pour les différents modes de mise en oeuvre, les mêmes références seront utilisées pour des éléments identiques ou assurant la même fonction, par souci de simplification de la description.

L'invention décrite de manière détaillée ci-dessous met en oeuvre un procédé de formation d'une membrane séparatrice, sous forme gélifiée, d'une batterie métal alcalin-ion, par voie fondue. Plus particulièrement, le procédé par voie fondue selon l'invention implique une étape d'extrusion. Le procédé selon l'invention, qui permet de réaliser des membranes flexibles sous forme gélifiée, ne met en oeuvre que trois éléments, à savoir un polymère support, un composé dinitrile, et un sel de métal alcalin.

A la figure 2, on peut voir un exemple de mise en oeuvre de la présente invention.

Le procédé selon l'invention comprend une étape d'extrusion d'un mélange. Un procédé d'extrusion permet de compresser le mélange, et de le contraindre à traverser une filière. La filière permet d'imposer une forme donnée au profil du mélange extrudé.

Par profil du mélange extrudé nous entendons l'intersection avec un plan perpendiculaire avec la direction d'extrusion dudit mélange.

L'extrusion est exécutée au moyen d'une extrudeuse 10, et permet de réaliser un mélange intime des différents éléments formant le mélange.

Plus particulièrement, l'extrusion permet de réaliser des membranes plus fines et plus conductrices que celles connue de l'état de la technique, par exemple d'une épaisseur comprise entre 10 µm et 50 µm.

L'extrudeuse 10 comprend un fourreau 11, s'étendant selon un axe longitudinal XX', à l'intérieur duquel est positionné un ou plusieurs vis sans fin, par exemple deux vis. L'extrudeuse 10 peut comprendre, en ligne (autrement dit selon l'axe longitudinal XX'), une ou plusieurs zones de chauffe 12, un zone de mélangeage 13, et un zone de pompage 14 terminée par une filière 15 (il est entendu que la zone de chauffe 12, la zone de mélangeage 13, et la zone de pompage 14 sont dans le fourreau).

Une zone de chauffe 12 est destinée à faire fondre, par élévation de température, au moins un des éléments formant le mélange. L'extrudeuse est également pourvue de premiers moyens d'alimentation 16, par exemple un doseur gravimétrique, permettant l'introduction d'éléments formant le mélange au niveau de l'une des zones de chauffe 12. L'élévation de température est assurée par des moyens de chauffage, dont la mise en oeuvre est connue par l'homme du métier, et ne sont, par conséquent, pas décrits dans la présente demande.

Une zone de mélangeage 13 assure un mélange intime des éléments formant le mélange, et peut être contigüe à la zone de chauffe 12. Le mélangeage est alors assurée par des moyens de mélangeage disposés sur la ou les vis sans fin. Plus particulièrement, les moyens de mélangeage constituent une rupture du filetage des vis sans fin, et peuvent comprendre des pales. Les moyens de mélangeage sont connus de l'homme du métier et ne sont donc pas décrits dans la présente demande. La zone de mélangeage est également destinée à induire un fort taux de cisaillement, et ainsi, comme nous le verrons dans la suite de la description, orienter les chaines d'un polymère support. La zone de mélangeage peut également comprendre des seconds moyens d'alimentation 16.

La zone de pompage 14, contigüe à la zone de mélangeage 13, pousse le mélange, par pression, vers la filière 15. La ou les vis sans fin comprennent dans la zone de pompage 14 un filetage permettant d'exercer la pression nécessaire pour pousser le mélange vers la filière 15.

La filière 15 peut conférer n'importe quelle forme au profil du mélange extrudé. Plus particulièrement, le mélange peut être extrudé en forme de feuille, de tube creux ou encore présenter un profil en coin.

L'extrusion peut être exécutée en introduisant tout ou partie des éléments formant le mélange dans l'extrudeuse au niveau des premiers moyens d'alimentation 16. Les éléments sont alors chauffés dans la zone de chauffe 12, et sont également poussés de la zone de chauffe 12 vers la zone de mélangeage 13 par le filetage de la ou des vis sans fin. Les éléments non introduits au niveau des premiers moyens d'alimentation 16 le sont au niveau des seconds moyens d'alimentation 17.

Les éléments formant le mélange comprennent :
- un sel de métal alcalin,
- un composé dinitrile de formule N≡C - R - C ≡ N, où R est un groupement hydrocarboné CₙH₂ₙ, et n étant égal à 1 ou 2,
- un polymère support thermo fusible, soluble dans le composé dinitrile.

Par sel de métal alcalin, on entend un sel de lithium, ou un sel de sodium, ou un sel de potassium.

Un sel de lithium peut comprendre au moins un des éléments choisi parmi : lithium bis-trifluorométhanesulfonimide (LiTFSI), lithium bis(oxatlato)borate (LiBoB), LiPF₆, LiClO₄, LiBF₄, LiAsF₆, LiCF₃SO₃, LiN(CF₃SO₂)₃, LiN(C₂F₅SO₂).

Un sel de lithium comprenant du LiPF₆ est généralement très utilisé pour la fabrication de la solution électrolytique des batteries Lithium ion, cependant il peut avantageusement être remplacée par un sel de lithium comprenant du LiTFSI qui ne se dégrade pas dès lors qu'il est mis en contact avec de l'eau.

Par ailleurs, le LiTFSI présente une stabilité thermique et chimique qui lui permettent d'améliorer la sûreté lors de sa mise en oeuvre dans des batteries lithium ion, ainsi que les performances de ces dernières. Ainsi, le sel de métal alcalin peut avantageusement comprendre du LiTFSI.

Un sel de sodium peut comprendre au moins des éléments choisi parmi : sodium bis-trifluorométhanesulfonimide (NaTFSI), Sodium bis(oxatlato)borate (NaBoB), NaPF₆, NaClO₄, NaBF₄, NaAsF₆, NaCF₃SO₃, NaN(CF₃SO₂)₃, NaN(C₂F₅SO₂).

Un sel de potassium peut comprendre au moins des éléments choisi parmi : Potassium bis-trifluorométhanesulfonimide (KTFSI), Potassium bis(oxatlato)borate (KBoB), KPF₆, KClO₄, KBF₄, KAsF₆, KCF₃SO₃, KN(CF₃SO₂)₃, KN(C₂F₅SO₂), KSCN.

Le composé dinitrile permet de solubiliser le sel de métal alcalin, plus particulièrement le sel de lithium.

Le sel de métal alcalin solubilisé dans le composé dinitrile forme la solution électrolytique.

Le composé dinitrile est du malononitrile ou du succinonitrile, respectivement, si n=1 ou n=2.

Le composé dinitrile, mis en oeuvre dans l'invention, présente une température de fusion supérieure à 20°C, et remplace avantageusement le solvant de la solution électrolytique connue de l'état de la technique.

De manière particulièrement avantageuse, n=2, autrement dit le composé dinitrile est du succinonitrile. Le succinonitrile est un composé organique hyper-plastique, ininflammable et non volatile qui présente une température de fusion de 57°C. Par ailleurs, le succinonitrile peut être utilisé dans une batterie de métal alcalin ion sur une gamme de températures comprises entre -20°C et 250°C.

Le sel de métal alcalin peut être solubilisé, à chaud, dans le composé dinitrile indifféremment avant l'extrusion ou pendant l'extrusion.

Le sel de métal alcalin solubilisé dans le composé dinitrile forme l'électrolyte, également noté électrolyte SNx.

L'introduction dans l'extrudeuse du sel de métal alcalin et du composé dinitrile, solubilisé ou non, peut être faite au niveau des premiers 16 ou des seconds 17 moyens d'alimentation.

Le sel de métal alcalin peut présenter une concentration, dans le composé dinitrile, comprise entre 0,5 mol/L⁻¹ et 5 mol/L⁻¹.

A titre d'exemple, le sel de métal alcalin peut être du LiPF₆, dilué dans du succinonitrile à 1M%.

De manière avantageuse et toujours à titre d'exemple, le sel de métal alcalin peut être du LiTFSI, et dilué dans du succinonitrile à 1 M%, plus particulièrement dans du succinonitrile comprenant également du LiBoB à 0,2 M%.

Le polymère support a pour fonction de former une matrice isolant physiquement les électrodes positives et négatives de la batterie métal alcalin ion, tout en permettant le transfert d'espèces ioniques d'une électrode à l'autre.

Selon l'invention, le polymère support est thermo fusible (et éventuellement thermo ductile) et soluble dans le composé dinitrile.

Il est entendu tout au long de la description, que le polymère support, au sens de l'invention, présente une température de transition vitreuse Tg.

Le polymère support est introduit dans la zone de chauffe 12 de l'extrudeuse 10 par l'intermédiaire des premiers moyens d'alimentation 16.

Le polymère support peut alors être avantageusement chauffé à une température T supérieure à sa température de transition vitreuse Tg.

Le polymère support, le composé dinitrile et le sel de métal alcalin sont alors mis en contact dans l'extrudeuse, soit au niveau de la zone de chauffe 12, soit au niveau de la zone de mélangeage 13.

Dès lors qu'ils sont mis en contact, soit dans la zone de chauffe 12, soit dans la zone de mélangeage 13, le polymère support et le composé dinitrile forment un gel.

Par gel, on entend un réseau tridimensionnel de solides dilué dans un fluide porteur. La cohésion du réseau tridimensionnel peut être assurée par des liaisons chimiques et/ou physiques, et/ou de petits cristaux, et/ou d'autres liaisons qui demeurent intacte dans le fluide porteur.

Dès lors qu'il se retrouve dans la zone de mélangeage, l'ensemble du mélange est homogénéisé, puis poussé dans la zone de pompage 14, puis dans la filière 15 pour se voir conférer la forme de membrane séparatrice voulue.

De manière avantageuse, le rapport massique entre le composé dinitrile et le polymère support est compris entre 40/60 et 90/10, préférentiellement entre 65/35 et 75/25, encore plus préférentiellement de l'ordre de 70/30.

Le polymère support peut comprendre au moins un des éléments choisi parmi : copolyfluorure de vinylidène hexafluoropropylène 21216 (PVDF-HFP 21216), copolyfluorure de vinylidène hexafluoropropylène 21510 (PVDF-HFP 21510), poly(méthyl méthacrylate) (PMMA), poly(butyl méthacrylate) (PBMA), oxyde de polyéthylène (POE), polyvinylpyrrolidone (PVP).

Les éléments précités présentent une stabilité chimique, thermique, et électrochimique requises pour être mis en oeuvre dans une membrane séparatrice d'une batterie métal alcalin ion.

Les inventeurs ont par ailleurs démontré qu'un polymère support comprenant l'un ou l'autre des polymères POE ou PVP gélifiait de manière quasi instantanée. Par ailleurs, à l'issue du processus de gélification, ces deux composés sont flexibles et présentent un léger gonflement.

Le POE, connu pour sa capacité à former des complexes avec une large variété de sels de lithium, présente une conductivité ionique relativement faible (10⁻⁸ à 10⁻⁵ S/cm) à température ambiante lorsqu'il est utilisé comme membrane solide. Cependant, dès lors qu'il est mis en combinaison avec un composé dinitrile, notamment du succinonitrile, la même membrane sous forme gélifiée voit sa conductivité ionique augmenter. Par exemple, une membrane séparatrice sous forme gélifiée comprenant du POE, du succinonitrile, et du LiTFSI, dans les proportions 70 : 25 : 5, présente une conductivité ionique de l'ordre de l'ordre de 10⁻³ S/cm à température ambiante.

Ainsi, l'emploi du composé dinitrile, et notamment du succinonitrile, en tant que plastifiant, permet d'améliorer la conductivité ionique de membranes séparatrices qui n'auraient pu être envisagées pour leur mise en oeuvre par voie solide.

En outre, dès lors que le composé dinitrile est du succinonitrile, un chauffage du polymère support à une température comprise entre Tg et Tg + 50 °C, avantageusement entre Tg et Tg + 25 °C, permet d'obtenir la membrane séparatrice sous forme gélifiées. Le succinonitrile permet de considérer des températures lors de l'extrusion proches de la température de transition vitreuse du polymère support.

Un polymère support comprenant l'un ou l'autre des polymères PVDF-HFP 21216 et PVDF-HFP 21510, à l'issue de sa gélification avec le composé dinitrile, présente des régions cristallines participant à la bonne tenue mécanique de la membrane séparatrice, et des régions amorphes capables de piéger une grande quantité du mélange de sel de métal alcalin solubilisé dans le composé dinitrile. L'utilisation de tels polymères permet d'obtenir des membranes présentant une bonne tenue mécanique et des performances électrochimiques compatibles avec leur utilisation dans une batterie métal alcalin ion.

En ce qui concerne le PMMA, les inventeurs ont pu démontrer que ce dernier peut gélifier jusqu'à une teneur massique de 70% d'électrolyte SNx (plus particulièrement l'électrolyte comprenant un mélange succinonitrile - sel de lithium).

Par ailleurs, la membrane séparatrice ainsi obtenue présente une bonne tenue mécanique et une conductivité ionique, entre 30 °C et 50 °C, de l'ordre de 10⁻⁴ à 10^{- 3} S/cm pour une épaisseur de 60 µm à température ambiante.

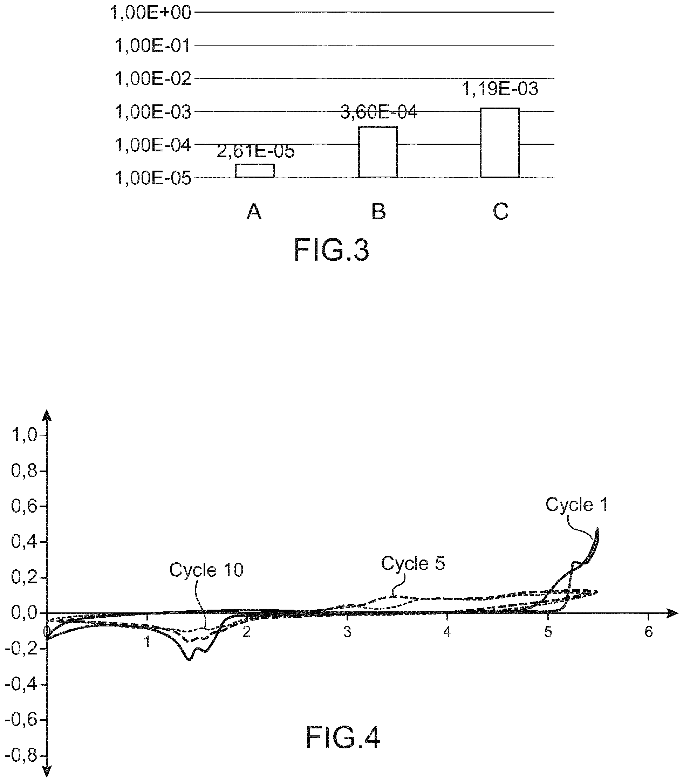

La figure 3 présente la conductivité ionique de trois membranes, A, B, et C, comprenant du PMMA, gélifiées chacune avec du succinonitrile. Les rapports massiques succinonitrile/PMMA, ainsi que la température de formation des membranes par extrusion sont donnés au tableau 1.

**Tableau 1**

| **Membrane** | **Rapport massique succinonitrile/PMMA** | **Température de formation (°C)** |
|---|---|---|
| A | 50/50 | 50 |
| B | 70/30 | 30 |
| C | 70/30 | 50 |

Les conductivité de chacune des membranes de PMMA gélifiées sont obtenues par spectroscopie d'impédance.

Les trois membranes A, B, et C présentent des conductivités ioniques acceptables pour leur mise en oeuvre dans une batterie métal alcalin ion, et plus particulièrement dans une batterie lithium ion.

La figure 4 représente une mesure de voltampérométrie (en mA sur l'axe vertical) cyclique exécutée pour des tensions comprises en 0 V et 5 V (en Volt sur l'axe horizontal), respectivement, pour un cycle (cycle 1), cinq cycles (cycle 5) et dix cycles (cycle 10) sur une membrane de PMMA gélifiée. Les mesures ainsi présentées à la figure 4 démontrent que la membrane reste stable dans un domaine de tension compris entre 0 V et 5 V.

L'invention n'est pas limitée à un seul polymère support, et un mélange d'une pluralité de polymères supports peut être envisagée.

Nous notons également que des électrodes, positives et négatives, peuvent également être fabriquées par un procédé d'extrusion, et être laminées avec la membrane séparatrice en sortie d'extrudeuse et ainsi constituer le coeur électrochimique d'une batterie métal alcalin ion.

Plus particulièrement, les électrodes peuvent également être formées sous forme gélifiée.

Ainsi, la formation de l'une ou l'autre des électrodes positive ou négative peut comprendre l'extrusion d'un mélange comprenant :
- un polymère support,
- un électrolyte comprenant un sel de métal alcalin solubilisé dans un composé dinitrile de formule N≡C - R - C ≡ N, où R est un groupement hydrocarboné CₙH₂ₙ, et n étant égal à 1 ou 2,
- un matériau actif adapté pour stocker et déstocker des ions alcalins (par exemple des ions lithium), le matériau actif étant avantageusement choisi parmi : LiFePO₄, LiNiMnCoO₂ si l'électrode est positive, et le matériau actif étant avantageusement du Li₄Ti₅O₁₂ si l'électrode est négative.
- un conducteur ionique comprenant par exemple un mélange de noir de carbone et de fibres de carbone.

Le choix du polymère support et du sel alcalin peut être le même que celui effectué pour le procédé de fabrication de la membrane séparatrice précédemment décrit.

Le composé dinitrile peut avantageusement être du succinonitrile.

L'extrusion peut être également exécutée dans des conditions similaires aux conditions d'extrusion de la membrane séparatrice selon l'invention.

Ainsi, la colamination de l'électrode positive, de la membrane séparatrice et de l'électrode négative peut être exécutée directement à la sortie de trois extrudeuses.

### RÉFÉRENCES

[1] Myung-Hyun Ryou et al., « Cross-linkable Polymer Matrix for Enhanced Thermal Stability of Succinonitrile-based Polymer Electrolyte in Lithium Rechargeable Batteries », Journal of Electrochemical Science and Technology, Vol. 2, No. 4, 198-203, 2011;
[2] Li-Zhen Fan et al., « Succinonitrile as a Versatile Additive for Polymer Electrolytes », Advanced functional Materials, 17, 2800-2807, 2007;
[3] Li-Zhen Fan et al., « All-solid-state polymer electrolyte with plastic crystal materials for rechargeable lithium-ion battery », Journal of Power sources, 189, 775-778, 2009;
[4] Voigt et al., « The effect of plastic-crystalline succinonitrile on the electrolyte system PEO :LiBF4 : Insights from solid state NMR », solid State Ionics, 260, 65-75, 2014;
[5] Li-Zhen Fan et al., « Composite effects in poly(ethylene oxide)-succinonitrile based all-solid electrolytes », Electrochemistry Communications, 8, 1753-1756, 2006;
[6] Yan-Hua Li et al., « A novel polymer electrolyte with improve high-temperature-tolerance up to 170°C for high-temperature lithium-ion batteries », Journal of Power Sources, 244, 234-239, 2013.

## Revendications

1. Procédé de fabrication d'une membrane séparatrice, sous forme gélifiée, d'une batterie métal alcalin-ion, le procédé comprend une étape d'extrusion d'un mélange comprenant :
- un sel de métal alcalin,
- un composé dinitrile de formule N≡C - R - C ≡ N, où R est un groupement hydrocarboné CₙH₂ₙ, et n étant égal à 1 ou 2, de préférence n est égal à 2,
- un polymère support, présentant une température de transition vitreuse Tg, thermo fusible, soluble dans le composé dinitrile.

2. Procédé selon la revendication 1, dans lequel le sel de métal alcalin est solubilisé à chaud dans le composé dinitrile pour former un électrolyte.

3. Procédé selon la revendication 1 ou 2, dans lequel l'extrusion est exécutée au moyen d'une extrudeuse comprenant en ligne au moins une zone de chauffe, au moins une zone de mélangeage, et un zone de pompage terminée par une filière.

4. Procédé selon la revendication 3, dans lequel le polymère support est introduit dans l'extrudeuse au niveau de la zone de chauffe, où il est chauffé à une température T supérieure à la température de transition vitreuse Tg, avantageusement à une température T comprise entre Tg et Tg + 50°C.

5. Procédé selon la revendication 3 ou 4, dans lequel le sel de métal alcalin et le composé dinitrile sont introduits dans l'extrudeuse soit au niveau de la zone de chauffe, soit au niveau de la zone de mélangeage.

6. Procédé selon l'une des revendications 1 à 5, dans lequel le sel de métal alcalin est un sel lithium, avantageusement, le sel de métal lithium comprend au moins un des éléments choisi parmi : lithium bis-trifluorométhanesulfonimide, lithium bis(oxatlato)borate, LiPF₆, LiClO₄, LiBF₄, LiAsF₆, LiCF₃SO₃, LiN(CF₃SO₂)₃, LiN(C₂F₅SO₂).

7. Procédé selon l'une des revendications 1 à 6, dans lequel le polymère support comprend au moins un des éléments choisi parmi : copolyfluorure de vinylidène hexafluoropropylène 21216, copolyfluorure de vinylidène hexafluoropropylène 21510, poly(méthyl méthacrylate), poly(butyl méthacrylate), oxyde de polyéthylène, polyvinylpyrrolidone.

8. Procédé selon l'une des revendications 1 à 7, dans lequel le rapport massique entre le composé dinitrile et le polymère support est compris entre 40/60 et 90/10.

9. Procédé selon l'une des revendications 1 à 8, dans lequel le sel de métal alcalin présente une concentration comprise entre 0,5 mol/L⁻¹ et 5 mol/L⁻¹ dans le composé dinitrile.

## Patentansprüche

1. Verfahren zum Herstellen einer Separatormembran in Gelform einer Alkalimetall-Ionen-Batterie, wobei das Verfahren einen Extrusionsschritt einer Mischung umfasst, welche umfasst:
- ein Alkalimetall-Salz,
- eine Dinitril-Verbindung der Formel N=C-R-C=N, wobei R eine Kohlenwasserstoff-Gruppe CₙH₂ₙ ist und n gleich 1 oder 2 ist, wobei n vorzugsweise gleich 2 ist,
- ein thermisch schmelzbares Trägerpolymer, welches eine Glasübergangstemperatur Tg aufweist, welches in der Dinitril-Verbindung lösbar ist.

2. Verfahren nach Anspruch 1, wobei das Alkalimetall-Salz in der Dinitril-Verbindung wärmelösbar ist, um ein Elektrolyt zu bilden.

3. Verfahren nach Anspruch 1 oder 2, wobei die Extrusion mittels eines Extruders durchgeführt wird, welcher in einer Reihe wenigstens eine Heizzone, wenigstens eine Mischungszone und eine Pumpzone umfasst, beendet durch ein Zieheisen.

4. Verfahren nach Anspruch 3, wobei das Trägerpolymer in den Extruder auf dem Niveau der Heizzone eingegeben wird, wo es auf eine Temperatur T erhitzt wird, welche größer als die Glasübergangstemperatur Tg ist, vorzugsweise auf eine Temperatur T, welche zwischen Tg und Tg+50°C beträgt.

5. Verfahren nach Anspruch 3 oder 4, wobei das Alkalimetall-Salz und die Dinitril-Verbindung in den Extruder entweder auf dem Niveau der Heizzone oder auf dem Niveau der Mischungszone eingegeben werden.

6. Verfahren nach einem der Ansprüche 1 bis 5, wobei das Alkalimetall-Salz ein Lithium-Salz ist, wobei das Lithiummetall-Salz vorzugsweise wenigstens eines der Elemente umfasst, ausgewählt aus: Lithium-Bis-Trifluoromethansulfonimid, Lithium-Bis(oxatlato)borat, LiPF₆, LiClO₄, LiBF₄, LiAsF₆, LiCF₃SO₃, LiN(CF₃SO₂)₃, LiN(C₂F₅SO₂).

7. Verfahren nach einem der Ansprüche 1 bis 6, wobei das Trägerpolymer wenigstens eines der Elemente umfasst, ausgewählt aus: Vinyliden-Hexafluoropropylen-Copolyfluorid 21216, Vinyliden-Hexafluoropropylen-Copolyfluorid 21510, Poly(methylmethacrylat), Poly(butylmethracrylat), Polyethylenoxid, Polyvinylpyrrolidon.

8. Verfahren nach einem der Ansprüche 1 bis 7, wobei das Massenverhältnis zwischen der Dinitril-Verbindung und dem Trägerpolymer zwischen 40/60 und 90/10 beträgt.

9. Verfahren nach einem der Ansprüche 1 bis 8, wobei das Alkalimetall-Salz eine Konzentration aufweist, welche zwischen 0,5 mol/L⁻¹ und 5 mol/L⁻¹ in der Dinitril-Verbindung beträgt.

## Claims

1. Method of manufacturing a separating membrane in gel form, for an alkali metal ion battery, the method comprises a step of extruding a mix comprising:
- an alkali metal salt,
- a dinitrile compound with formula N≡C - R - C ≡ N, in which R is a hydrocarbon group CₙH₂ₙ, and n is equal to 1 or 2 and preferably equal to 2,
- a hot melt support polymer with a glass transition temperature Tg, soluble in the dinitrile compound.

2. Method according to claim 1, in which the alkali metal salt is heat-solubilised in the dinitrile compound to form an electrolyte.

3. Method according to claim 1 or 2, in which extrusion is made by means of an extruder comprising a line composed of at least one heating zone, at least one mixing zone and a pumping zone terminated by a die.

4. Method according to claim 3, in which the support polymer is added into the extruder at the heating zone, where it is heated to a temperature T higher than the glass transition temperature Tg, advantageously to a temperature T between Tg and Tg + 50°C.

5. Method according to claim 3 or 4, in which the alkali metal salt and the dinitrile compound are introduced into the extruder either in the heating zone, or in the mixing zone.

6. Method according to any one of claims 1 to 5, in which the alkali metal salt is a lithium salt, the lithium metal salt advantageously comprises at least one element chosen from among lithium bis-trifluoromethanesulfonimide, lithium bis(oxatlato)borate, LiPF₆, LiClO₄, UBF₄, LiAsF₆, LiCF₃SO₃, LiN(CF₃SO₂)₃, LiN(C₂F₅SO₂).

7. Method according to any one of claims 1 to 6, in which the support polymer comprises at least one element chosen from among polyvinylidene hexafluoropropylene copolyfluoride 21216, polyvinylidene hexafluoropropylene copolyfluoride 21510, poly(methyl methacrylate), poly(butyl methacrylate), polyethylene oxide, polyvinylpyrrolidone.

8. Method according to any one of claims 1 to 7, in which the mass ratio between the dinitrile compound and the support polymer is between 40/60 and 90/10.

9. Method according to any one of claims 1 to 8, in which the concentration of the alkali metal salt in the dinitrile compound is between 0.5 mol/L⁻¹ and 5 mol/L⁻¹.
